(19) **Europäisches Patentamt**
**European Patent Office**
**Office européen des brevets**

(11) **EP 2 667 023 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(51) Int Cl.:
*F03D 7/04* *(2006.01)*  *F03D 7/02* *(2006.01)*

(21) Anmeldenummer: **13163659.9**

(22) Anmeldetag: **15.04.2013**

(54) **Steuerung eines Windenergiesystems**

Control of a wind energy system

Commande d'un système d'énergie éolienne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2012 DE 102012009867**

(43) Veröffentlichungstag der Anmeldung:
**27.11.2013 Patentblatt 2013/48**

(73) Patentinhaber: **innogy SE**
**45128 Essen (DE)**

(72) Erfinder:
• **Koch, Dr. Friedrich**
**47623 Kevelaer (DE)**
• **Schierenbeck, Olaf**
**21220 Seevetal (DE)**
• **Schöppenthau, Kai**
**21220 Seevetal (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 1 571 746    EP-A2- 2 128 438**
**US-A1- 2008 048 501**

**Beschreibung**

Die Erfindung betrifft ein Windenergiesystem, insbesondere ein Offshore-Windenergiesystem, umfassend eine erste Windkraftanlage und mindestens eine weitere Windkraftanlage, wobei die Windkraftanlagen jeweils eine Leistungserfassungseinrichtung zum Erfassen des Ist-Werts der abgegeben Leistung aufweisen, und mindestens eine über ein Kommunikationsnetz mit den Windkaftanlagen verbundene Steuereinrichtung. Darüber hinaus betrifft die Erfindung ein Verfahren zum Steuern eines Windenergiesystems und ein Computerprogramm zur Durchführung des Verfahrens.

Die Nachfrage nach Energie aus regenerativen Quellen steigt stetig. Eine der zur Verfügung stehenden Ressourcen ist hierbei die Windenergie. Eine Windkraftanlage wandelt die kinetische Energie des Windes mittels eines Rotors und eines Generators in elektrische Energie um.

Um den Energieertrag zu maximieren, kann aus mehreren Windkraftanlagen ein Windenergiesystem bzw. ein Windpark gebildet werden. Die Windkraftanlagen können insbesondere in Gebieten mit hoher Windwahrscheinlichkeit und -intensität aufgestellt werden. Besonders geeignet sind Standorte auf der offenen See, auch Offshore-Gebiete genannt.

Grundsätzlich ist es ein stetiges Anliegen der Windenergiesystembetreiber die gesamte erzeugbare Energie in das Stromnetz einzuspeisen. Aufgrund von z.B. Netzschwankungen und/oder einer geringen Nachfrage nach elektrischer Energie kann es jedoch vorkommen, dass beispielsweise von einem Netzbetreiber vorgegeben wird, die Strommenge bzw. Leistung, die ins Netz von dem Windenergiesystem eingespeist wird, für eine bestimmte Zeitdauer zu reduzieren.

Aus dem Stand der Technik ist es bekannt, dass bei einer entsprechenden Vorgabe zur Leistungsreduktion mindestens eine Windkraftanlage abgeschaltet werden kann. Problematisch ist jedoch, wie viele und welche Windkraftanlagen hierbei deaktiviert werden sollen. Um einen vorgegebenen Sollwert von einem Netzbetreiber unmittelbar einstellen zu können und gleichzeitig die Leistung nicht über Gebühr zu reduzieren, schlägt die DE 10 2006 032 389 A1 ein Windenergiesystem vor, bei dem die Auswahl der abzuschaltenden Windkraftanlagen in Abhängigkeit von dem Ist-Wert der insgesamt von den übrigen Windkraftanlagen abgegebenen Leistung erfolgt. Insbesondere wird in diesem Stand der Technik vorgeschlagen, dass der Ist-Wert der weiterhin aktivierten Windkraftanlagen im Wesentlichen dem von dem Netzbetreiber vorgegebenen Sollwert entspricht. Hierdurch wird verhindert, dass eine unnötige Leistungsreduzierung erfolgt. Gleichzeitig wird eine unmittelbare Anpassung der erzeugten Strommenge sichergestellt.

Nachteilig an dem Stand der Technik ist jedoch, dass ausschließlich der Ist-Wert der aktuell von einer Windkraftanlage erzeugten Leistung bei einer erforderlichen Leistungsreduzierung betrachtet wird. Ansonsten erfolgt eine beliebige Auswahl der abzuschaltenden Windkraftanlagen. Indem bei der Auswahl der abzuschaltenden Windkraftanlagen nur die Ist-Werte der abgegebenen Leistung berücksichtigt werden, werden im Stand der Technik Windkraftanlagen weiterbetrieben, dessen Betriebsfähigkeit, insbesondere dessen Leistungsfähigkeit und Zuverlässigkeit, geringer ist, als die Betriebsfähigkeit von deaktivierten Windkraftanlagen. Dies kann die Betriebsfähigkeit der aktivierten Windkraftanlagen weiter verringern und sogar zu einem Ausfall einer Windkraftanlage führen. Die Zuverlässigkeit des Betriebs des Windenergiesystems ist reduziert. Aus der US 2008/048501 A1 und der EP 1 571 746 A1 sind Windenergiesysteme bekannt.

Der Erfindung liegt daher die Aufgabe zugrunde, ein Windenergiesystem und ein Verfahren zum Steuern eines Windenergiesystems zur Verfügung zu stellen, welches bei einer erforderlichen Leistungsreduktion sicherstellt, dass die Windkraftanlagen mit einer besseren Betriebsfähigkeit weiterbetrieben werden.

Die Aufgabe wird erfindungsgemäß bei einem Windenergiesystem, insbesondere einem Offshore-Windenergiesystem, gemäß Patentanspruch 1 und bei einem Verfahren zum Betreiben eines Windenergiesystems gemäß Patentanspruch 9 gelöst. Das Windenergiesystem umfasst eine erste Windkraftanlage und mindestens eine weitere Windkraftanlage. Die Windkraftanlagen weisen jeweils eine Leistungserfassungseinrichtung zum Erfassen des Ist-Werts der abgegeben Leistung auf. Das Windenergiesystem umfasst mindestens eine über ein Kommunikationsnetz mit den Windkaftanlagen verbundene Steuereinrichtung. Die erste Windkraftanlage weist mindestens eine Betriebszustandserfassungseinrichtung zur Erfassung von mindestens einem Betriebsparameter der ersten Windkraftanlage auf. Die weitere Windkraftanlage weist mindestens eine Betriebszustandserfassungseinrichtung zur Erfassung von mindestens einem Betriebsparameter der weiteren Windkraftanlage auf. Die Steuereinrichtung ist dazu eingerichtet, eine Leistungskennung für die erste Windkraftanlage zumindest in Abhängigkeit des Betriebsparameters der ersten Windkraftanlage zu bestimmen. Die Steuereinrichtung ist dazu eingerichtet, eine Leistungskennung für die weitere Windkraftanlage zumindest in Abhängigkeit des Betriebsparameters der weiteren Windkraftanlage zu bestimmen. Die Steuereinrichtung ist dazu eingerichtet, bei einer erforderlichen Leistungsreduzierung mindestens eine Windkraftanlage in Abhängigkeit der Leistungskennungen zu deaktivieren.

Im Gegensatz zum Stand der Technik erfolgt die Auswahl der zu deaktivierenden Windkraftanlage/n nicht beliebig, sondern in Abhängigkeit des jeweiligen Betriebszustands der Windkraftanlagen. Insbesondere kann die Windkraftanlage deaktiviert werden, welche sich (aktuell) in einem gegenüber der mindestens einen weiteren Windkraftanlage schlechteren Betriebszustand befindet. Hierdurch kann ein zuverlässigerer Betrieb des Windenergiesystems sichergestellt werden.

Das Windenergiesystem umfasst mindestens zwei Windkraftanlagen. Vorzugsweise kann eine Vielzahl von Windkraftanlagen in einem Windenergiesystem integriert sein. Eine Windkraftanlage ist dazu eingerichtet, die kinetische Energie des Winds mittels einer Generatoreinrichtung in elektrische Leistung zu wandeln. Die elektrische Leistung kann über Energiekabel und Umspanneinrichtungen in ein Netz eingespeist werden.

Zur Steuerung der Windkraftanlagen ist eine Steuereinrichtung vorgesehen. Insbesondere kann eine zentrale Steuereinrichtung z.B. in Form einer Datenverarbeitungsanlage für mindestens ein Windenergiesystem vorgesehen sein. Für eine Kommunikation mit den Windkraftanlagen ist ein Kommunikationsnetz installiert. Das Kommunikationsnetz kann drahtgebundene und/oder drahtlose Kommunikationskanäle aufweisen. Über das Kommunikationsnetz können Daten zwischen der Steuereinrichtung und den Windkraftanlagen ausgetauscht werden. Beispielsweise können Sensordaten von den Windkraftanlagen an die Steuereinrichtung und/oder von der Steuereinrichtung Steuerungssignale an die Windkraftanlagen übertragen werden. Es versteht sich, dass weitere Daten über das Kommunikationsnetz ausgetauscht werden können.

Jede Windkraftanlage kann eine Leistungserfassungseinrichtung aufweisen. Eine Leistungserfassungseinrichtung ist dazu eingerichtet, die aktuell erzeugte Leistung, also den Ist-Wert der abgegeben Leistung der Windkraftanlage zu erfassen. Wenn das Erfordernis zur Leistungsreduzierung beispielsweise aufgrund einer Anweisung eines Netzbetreiber auftritt und ein maximaler Sollwert vorliegt, kann in Abhängigkeit der Ist-Werte insbesondere die Anzahl der zu deaktivierenden Windenergieeinrichtungen bestimmt werden. Hierdurch kann verhindert werden, dass eine unnötige Leistungsreduzierung erfolgt.

Die Auswahl, welche Windkraftanlagen tatsächlich angeschaltet werden, wird erfindungsgemäß anhand der jeweiligen Leistungskennung der Windkraftanlagen bestimmt. Die Leistungskennung kann insbesondere ein "key performance indicator" sein. Insbesondere kann die Leistungskennung eine (Gesamt-)Leistungsfähigkeit und/oder Betriebsfähigkeit der jeweiligen Windkraftanlage repräsentieren. In der Leistungskennung kann zumindest der aktuelle Betriebszustand der Windkraftanlage Berücksichtigung finden.

Zur Erfassung des Betriebszustands einer Windkraftanlage weist die Windkraftanlage mindestens eine Betriebszustandserfassungseinrichtung auf. Beispielsweise kann mindestens ein Sensor vorgesehen sein. Insbesondere kann zumindest ein Betriebsparameter, bevorzugt eine Vielzahl von Betriebsparametern, durch die mindestens eine Betriebszustandserfassungseinrichtung erfasst werden. Beispielhafte und nicht abschließende Betriebsparameter sind die Temperatur eines Bauteils der Windkraftanlage, die Temperatur des Windkraftanlagenturms, der Zustand des Fundaments des Windkraftanlagenturms, die Reinheit des verwendeten Schmieröls, ein Leitungsdruck, der Zustand der Rotorblätter, der Zustand eines Schutzsystems, wie ein Brandschutzsystem, etc.

Aus mindestens einem insbesondere aktuellen Betriebsparameter wird von der Steuereinrichtung die Leistungskennung abgeleitet bzw. bestimmt. Die Leistungskennung kann ein Zahlenwert sein. Beispielsweise kann eine hohe Leistungsfähigkeit einer Windkraftanlage durch einen hohen Zahlenwert und eine geringe Leistungsfähigkeit einer Windkraftanlage durch einen geringen Zahlenwert dargestellt werden. Eine umgekehrte Einteilung ist ebenso denkbar. Eine einfache Bewertung des jeweiligen Zustands der Windkraftanlagen ist gegeben.

Nicht abschließende Beispiele von Faktoren, welche zu einer geringeren Leistungskennung führen können, sind Betriebsparameter, die von einem Normalbereich aktuell abweichen. Beispielsweise ein zu hoher (oder zu geringer) Temperaturwert eines Bauteils, ein zu hoher (oder zu geringer) Leistungsdruck, eine zu hohe Verunreinigung des Schmieröls, etc. Auch kann eine aktivierte Schutzeinrichtung die Leistungskennung verringern. Umgekehrt können besonders gute aktuelle Betriebsparameter die Leistungskennung einer Windkraftanlage erhöhen.

Erfindungsgemäß kann/können insbesondere die Windkraftanlage/n deaktiviert werden, welche die geringste Leistungsfähigkeit aufweist. Hierzu kann die Steuereinrichtung die aktuellen Leistungskennungen der zumindest zwei Windkraftanlagen auswerten und in Abhängigkeit der Auswertung ein Steuersignal, insbesondere ein Deaktivierungssignal, an die zu deaktivierenden Windkraftanlage/n übertragen.

Indem eine spezielle Auswahl der zu deaktivierenden Windkraftanlagen zumindest in Abhängigkeit ihres aktuellen Betriebszustands erfolgt, kann das Windenergiesystem mit einer erhöhten Zuverlässigkeit betrieben werden.

Es versteht sich, dass für jede Windkraftanlage insbesondere die gleichen Betriebsparameter erfasst werden können, um eine Vergleichbarkeit der Windkraftanlagen bzw. der Leistungskennungen zu gewährleisten.

Gemäß einer ersten Ausführungsform des erfindungsgemäßen Windenergiesystems kann die Steuereinrichtung eingerichtet sein, die Leistungskennungen der Windkraftanlagen miteinander zu vergleichen. Eine Vergleichsoperation kann in einfacher und insbesondere zeitnaher Weise beispielsweise durch ein Software- und/oder Hardwaremodul in der Steuereinrichtung durchgeführt werden. Besonders einfach und schnell lassen sich Zahlenwerte miteinander vergleichen. Die Steuereinrichtung kann eingerichtet sein, bei einer erforderlichen Leistungsreduzierung mindestens eine Windkraftanlage in Abhängigkeit des Vergleichsergebnisses zu deaktivieren. Wie bereits beschrieben wurde, kann die Steuereinrichtung ein Steuersignal, insbesondere ein Deaktivierungssignal, an die jeweilige/n Windkraftanlage/n übertragen.

Es ist ferner erkannt worden, dass eine noch aussagekräftigere Leistungskennung für eine Windkraftanlage generiert werden kann, wenn zusätzlich historische Betriebsdaten der Windkraftanlage bei der Bestimmung der Leistungskennung herangezogen werden. Beispielsweise können historische Betriebsparameter Hinweise zur Zuverlässigkeit der Windkraftanlage liefern. Wenn eine Windkraftanlage in der Vergangenheit vermehrt Betriebswerte aufgewiesen hat, die gegenüber einem normalen Betriebszustand abgewichen haben, oder wenn eine Windkraftanlage in der Vergangenheit ein oder mehrmals ausgefallen ist, kann dies auf eine geringere Leistungsfähigkeit und Zuverlässigkeit hinweisen.

Um historische Parameterdaten zu berücksichtigen, kann gemäß einer bevorzugten Ausführungsform des erfindungsgemäßen Windenergiesystems eine Betriebszustandserfassungseinrichtung eingerichtet sein, den Betriebsparameter kontinuierlich oder in vorgebbaren Zeitabständen zu erfassen. Beispielsweise kann ein Betriebsparameter regelmäßig erfasst werden. Eine Datenbank kann zur Speicherung der erfassten Betriebsparameterwerte vorgesehen sein. Insbesondere kann die Datenbank mit der Steuereinrichtung verbunden sein. Bevorzugt können sämtliche Parameterwerte von bevorzugten sämtlichen Betriebsparametern in der Datenbank gespeichert sein. Die Steuereinrichtung kann eingerichtet sein, die Leistungskennung der Windkraftanlage in Abhängigkeit der gespeicherten Betriebsparameterwerte zu bestimmen.

Vorzugsweise können die historischen Betriebsparameter von der Steuereinrichtung analysiert und ausgewertet werden. Insbesondere kann eine statistische Auswertung der gespeicherten Betriebsparameter erfolgen. Beispielsweise können die Häufigkeit bestimmter Fehlermeldungen, die Häufigkeit des Auftretens von Abweichungen und/oder die Häufigkeit von Ausfällen von jeder Windkraftanlage ermittelt werden. Ferner kann die Zeitdauer eines Ausfalls oder die Zeitdauer der Überschreitung von normalen Betriebsparameterbereichen bestimmt werden. Hieraus können Parameter, wie mittlere Ausfalldauer, mittlere Dauer zwischen zwei Ausfällen, mittlere Dauer einer Abweichung eines Betriebsparameter von einem Normalbereich und dergleichen bestimmt werden. Bei der Bestimmung der jeweiligen Leistungskennung können diese Parameter berücksichtigt werden. Dies erlaubt es, dass zuverlässigere Windkraftanlagen bei einer erforderlichen Leistungsreduktion weiterbetrieben werden können, während unzuverlässigere Windkraftanlagen deaktiviert werden können.

Alternativ oder zusätzlich zu historischen Betriebsparametern können Umgebungsparameter bei der Bestimmung der Leistungskennung einer Windkraftanlage berücksichtigt werden. Insbesondere können Umgebungsparameter, wie meteorologische Umgebungsparameter, Einfluss auf die Leistungsfähigkeit einer Windkraftanlage haben. Beispielsweise kann eine Windkraftanlage bei bestimmten Windverhältnissen eine höhere Leistungsfähigkeit als eine andere Windkraftanlage bei den gleichen Windverhältnissen aufweisen. Vorzugsweise kann gemäß einer weiteren Ausführungsform mindestens eine Erfassungseinrichtung zum Erfassen von mindestens einem Umgebungsparameter, insbesondere eines aktuellen meteorologischen Umgebungsparameters, vorgesehen sein. Die Steuereinrichtung kann eingerichtet sein, die Leistungskennung einer Windkraftanlage in Abhängigkeit des Umgebungsparameters zu bestimmen. Die mindestens eine meteorologische Messeinrichtung kann insbesondere ein Windmessmast zur Erfassung der aktuellen Windgeschwindigkeit und/oder Windrichtung und/oder eine Messboje zur Bestimmung des aktuellen Seegangs sein. Die Auswahl einer abzuschaltenden Windkraftanlage aus einer Mehrzahl von Windkraftanlagen kann weiter verbessert werden.

Eine Windkraftanlage kann eine Mehrzahl von Subeinrichtungen bzw. Bauteilen aufweisen. Vorzugsweise kann die Windkraftanlage in einer Mehrzahl von Subeinrichtungen unterteilt werden, welche eine technische Einheit bilden können. Eine Windkraftanlage kann gemäß einer Ausführungsform mindestens eine Subeinrichtung aufweisen. Die Steuereinrichtung kann eingerichtet sein, mindestens eine Subleistungskennung der Subeinrichtung der Windkraftanlage zu bestimmen. Insbesondere kann mindestens eine Betriebserfassungseinrichtung zur Erfassung eines Betriebsparameters der Subeinrichtung vorgesehen sein. Insbesondere kann die Bestimmung einer Subleistungskennung wie zuvor in Zusammenhang mit der Bestimmung einer Leistungskennung beschrieben wurde bestimmt werden. Durch die Bestimmung einer Subleistungskennung kann die Leistungsfähigkeit einer Subeinrichtung zur Verfügung gestellt werden.

Beispielhafte und nicht abschließende Subeinrichtungen einer Windkraftanlage sind eine Generatoreinrichtung, eine Klimaeinrichtung, eine Rotoreinrichtung, ein Turmfundament, eine Messeinrichtung, etc. Es versteht sich, dass eine Subeinrichtung wiederum in mindestens eine weitere Subeinrichtung unterteilt werden kann.

Wenn eine Mehrzahl von Subleistungskennungen einer Windkraftanlage von der Steuereinrichtung bestimmt sind, kann die Leistungskennung der Windkraftanlage in einfacher Weise aus den Subleistungskennungen abgeleitet werden. Gemäß einer Ausführungsform kann die Steuereinrichtung eingerichtet sein, aus einer Mehrzahl von Subleistungskennungen einer Windkraftanlage die Leistungskennung der Windkraftanlage zu bestimmen. Vorzugsweise können sämtliche Subleistungskennungen einer Windkraftanlage zur Bestimmung der Leistungskennung berücksichtigt werden. Beispielsweise kann die Leistungskennung aus den Subleistungskennungen geschätzt werden. Bevorzugt kann die Steuereinrichtung ein Modul zum Berechnen der Leistungskennung aufweisen. Beispielsweise durch eine Integration und/oder Summation der Subleistungskennung kann die Leistungskennung bestimmt werden. Es versteht sich, dass eine Normierung durchgeführt werden kann, um in einfacher Weise die Leistungskennungen verschiedener Windkraftanlagen vergleichen zu können.

Darüber hinaus ist erkannt worden, dass unterschiedliche Subeinrichtungen einen unterschiedlichen Einfluss auf die Betriebsfähigkeit einer Windkraftanlage haben können. Beispielsweise kann der Ausfall einer Subeinrichtung (nahezu) keinen Einfluss auf die Betriebsfähigkeit der Windkraftanlage haben, während eine geringe Abweichung eines Betriebsparameters von einem Normalbereich einer anderen Subeinrichtung die Betriebsfähigkeit der Windkraftanlage erheblich beeinträchtigen kann. Beispielsweise kann ein Ausfall der Klimaeinrichtung von einem Windkraftanlagenturm nur geringe Auswirkungen haben, während eine erhöhte Konzentration von Schmutzpartikeln im Schmieröl des Schaltgetriebes erhebliche Auswirkungen haben kann.

In einer bevorzugten Ausführungsform kann die Steuereinrichtung eingerichtet sein, mindestens einer Subleistungskennung mindestens einen Gewichtungsfaktor zu zuordnen. Insbesondere kann jeder Subleistungskennung ein Gewichtungsfaktor zugeordnet werden. Der Gewichtungsfaktor ist insbesondere ein Maß dafür, wie stark der Einfluss einer Subeinrichtung auf die Gesamtbetriebsfähigkeit der Windkraftanlage ist. Hierdurch kann der Einfluss einer Subeinrichtung auf die Betriebsfähigkeit der Windkraftanlage berücksichtigt werden. Eine Subeinrichtung mit einem geringen Einfluss kann mit einem niedrigen Gewichtungsfaktor und eine Subeinrichtung mit einem großen Einfluss mit einem entsprechend größeren Gewichtungsfaktor gekoppelt werden.

Die Bestimmung des jeweiligen Gewichtungsfaktors kann manuell und/oder automatisch erfolgen. Beispielsweise kann aus historischen Daten automatisch abgeleitet werden, welche Subeinrichtungen besonders relevant für die Betriebsfähigkeit der Windkraftanlage sind und welche weniger relevant sind.

Gemäß einer bevorzugten Ausführungsform kann die Steuereinrichtung eingerichtet sein, ein Modell von mindestens einer Windkraftanlage zu erzeugen. Insbesondere kann das gesamte Windenergiesystem als virtuelles Modell in der Steuereinrichtung abgebildet werden. Mittels des Modells kann die Leistungskennung einer Windkraftanlage bestimmt werden. Die Steuereinrichtung kann eingerichtet sein, einen Leistungskennungsverlauf der Windkraftanlage mittels des Modells zu simulieren. Beispielsweise kann ein geeignetes Softwareprogramm, wie Matlab, eingesetzt werden. In dem Modell kann zusätzlich der Einfluss von mindestens einem Umgebungsparameter, wie der Seegang oder die Windgeschwindigkeit, berücksichtigt werden. Insbesondere kann ein Leistungskennungsverlauf durch die Simulation von der Steuereinrichtung prognostiziert werden.

Die Steuereinrichtung kann eingerichtet sein, bei einer erforderlichen Leistungsreduzierung mindestens eine Windkraftanlage in Abhängigkeit des Simulationsergebnisses zu deaktivieren. Beispielsweise kann die Leistungsreduzierung für eine bestimmte Zeitdauer vorgegeben sein. Die Steuereinrichtung kann für diese Zeitdauer den Leistungskennungsverlauf insbesondere in Abhängigkeit von prognostizierten meteorologischen Parametern simulieren. Die Windkraftanlage mit der prognostizierten geringsten Leistungskennung kann deaktiviert werden. Vorzugsweise können die Simulationen bereits während des normalen Betriebs des Windenergiesystems durchgeführt und in einer Datenbank abgespeichert worden sein. Im Bedarfsfall kann dann ein Vergleich der abgespeicherten Daten durchgeführt werden. Die Auswahl der zu deaktivierenden Windkraftanlage kann zeitnah erfolgen.

Ein weiterer Aspekt der Erfindung ist ein Verfahren zum Steuern eines Windenergiesystems, insbesondere eines Offshore-Windenergiesystems, umfassend eine erste Windkraftanlage und mindestens eine weitere Windkraftanlage. Das Verfahren umfasst das Erfassen der Ist-Werte der abgegeben Leistung der Windkraftanlagen. Mindestens ein erster Betriebsparameter einer ersten Windkraftanlage wird erfasst. Mindestens ein weiterer Betriebsparameter von mindestens einer weiteren Windkraftanlage wird erfasst. Eine Leistungskennung für die erste Windkraftanlage wird zumindest in Abhängigkeit des Betriebsparameters der ersten Windkraftanlage bestimmt. Mindestens eine weitere Leistungskennung für die weitere Windkraftanlage wird in Abhängigkeit des Betriebsparameters der weiteren Windkraftanlage bestimmt. Bei einer erforderlichen Leistungsreduzierung wird mindestens eine Windkraftanlage in Abhängigkeit der Leistungskennungen deaktiviert.

Das Verfahren kann insbesondere in einem zuvor beschriebenen Windenergiesystem eingesetzt werden. Das Verfahren erlaubt in einfacher Weise die Windkraftanlagen weiterzubetreiben, welche eine hohe Zuverlässigkeit und Betriebsfähigkeit aufweisen, während die Windkraftanlagen deaktiviert werden können, deren Zuverlässigkeit und Betriebsfähigkeit geringer sind.

Ein noch weiterer Aspekt der Erfindung ist ein Computerprogramm mit Instruktionen ausführbar auf einem Prozessor derart, dass ein Windenergiesystem gemäß dem zuvor beschriebenen Verfahren gesteuert wird.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Windenergiesystem, das erfindungsgemäße Verfahren zum Steuern eines Windenergiesystems sowie das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1        eine schematische Ansicht eines ersten Ausführungsbeispiels eines Windenergiesystems gemäß der vorliegenden Erfindung,

Fig. 2     eine schematische Ansicht eines weiteren Ausführungsbeispiels eines Windenergiesystems gemäß der vorliegenden Erfindung,

Fig. 3     eine schematische Ansicht eines weiteren Ausführungsbeispiels eines Windenergiesystems gemäß der vorliegenden Erfindung,

Fig. 4a     eine schematische Ansicht eines ersten Ausführungsbeispiels eines Leitungskennungsverlaufs,

Fig. 4b     eine schematische Ansicht eines weiteren Ausführungsbeispiels eines Leitungskennungsverlaufs, und

Fig. 5     eine schematische Ansicht eines Flussdiagramms eines Ausführungsbeispiels eines Verfahrens gemäß der vorliegenden Erfindung zum Steuern eines Windenergiesystems.

Nachfolgend werden für gleiche Elemente gleiche Bezugszeichen verwendet.

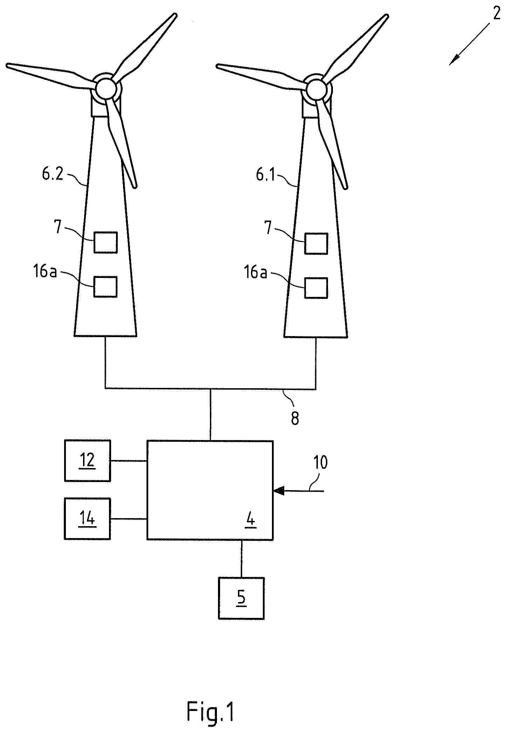

Figur 1 zeigt eine schematische Ansicht eines ersten Ausführungsbeispiels eines Windenergiesystems 2 gemäß der vorliegenden Erfindung. Das Windenergiesystem 2 umfasst vorliegend eine Steuereinrichtung 4, welche über ein Kommunikationsnetz 8 mit einer ersten Windkraftanlage 6.1 und einer weiteren Windkraftanlage 6.2 verbunden ist. Es versteht sich, dass mehr als zwei Windkraftanlagen 6.1, 6.2 vorgesehen sein können. Das Kommunikationsnetz 8 kann drahtgebundene und/oder drahtlose Kommunikationskanäle aufweisen.

Eine Windkraftanlage 6.1, 6.2 ist dazu eingerichtet, die kinetische Energie des Winds in elektrische Energie zu wandeln. Über (nicht dargestellte) Energiekabel und ggf. Umspannwerke kann der erzeugte Strom in ein (öffentliches) Netz eingespeist werden.

Eine Windkraftanlage 6.1, 6.2 kann eine Leistungserfassungseinrichtung 7 zum Erfassen der aktuell abgegebenen Leistung aufweisen. Beispielsweise kann ein Leistungsmesser 7 vorgesehen sein. Die Ist-Werte der abgegeben Leistung können an die Steuereinrichtung 4 übertragen werden.

Ferner weisen die Windkraftanlagen im vorliegenden Ausführungsbeispiel jeweils eine Betriebszustandserfassungseinrichtung 16a auf. Die Betriebszustandserfassungseinrichtung 16a ist dazu eingerichtet, mindestens einen Betriebsparameter bzw. Zustandsparameter der Windkraftanlage 6.1, 6.2 zu erfassen.

Die Steuereinrichtung 4 kann insbesondere eine Datenverarbeitungsanlage sein, wie ein Computer oder dergleichen. Die Steuereinrichtung 4 kann eine Datenbank umfassen oder mit einer Datenbank 5 verbunden sein. Vorliegend ist ferner eine Anzeigeneinrichtung 12, wie ein Display 12, zur Darstellung von Informationen vorgesehen. Darüber hinaus können Schnittstellenmittel 14 beispielsweise in Form einer Tastatur, einer Maus, eines Touchscreens, etc. vorgesehen sein. Die Steuereinrichtung 4 kann insbesondere in einem Kontrollraum angeordnet sein.

Ferner kann die Steuereinrichtung 4 über einen weiteren Dateneingang 10 ein Signal empfangen. Bei dem Signal kann es sich insbesondere um ein Energieerzeugungsinformationssignal handeln. Mit diesem Signal kann vorgegeben werden, wie viel Energie für einen bestimmten Zeitraum erzeugt werden soll/darf. Beispielsweise kann vorgesehen sein, dass zur Einhaltung der vorgegebenen Sollenergie zumindest eine der zumindest zwei Windkraftanlagen deaktiviert werden muss.

Empfängt die Steuereinrichtung 4 ein entsprechendes Signal, so kann bevorzugt automatisch von der Steuereinrichtung 4 bestimmt werden, welche Windkraftanlage 6.1, 6.2 deaktiviert wird. Es ist erkannt worden, dass bevorzugt die Windkraftanlage 6.1, 6.2 deaktiviert werden sollte, welche eine geringere Leistungsfähigkeit bzw. Betriebsfähigkeit aufweist.

Zur Bestimmung der Leistungsfähigkeit kann die Steuereinrichtung 4 für die zumindest zwei Windkraftanlagen 6.1, 6.2 eine Leistungskennung bestimmen. Die Bestimmung der jeweiligen Leistungskennung kann in unterschiedlicher Weise erfolgen. Es wird zumindest ein (aktueller) Betriebsparameter der jeweiligen Windkraftanlage 6.1, 6.2 erfasst und berücksichtigt. Beispielsweise kann ein aktueller Betriebsparameter der ersten Windkraftanlage 6.1 einen gegenüber einem Normalbereich besseren Wert als der gleiche Betriebsparameter der weiteren Windkraftanlage 6.2 aufweisen.

Ferner kann beispielsweise die technische Spezifikation, wie die technischen Eigenschaften, Funktionen und/oder Strukturen, der jeweiligen Windkraftanlage eingelesen werden. Beispielsweise kann die technische Spezifikation von dem Hersteller zur Verfügung gestellt werden. So kann eine Windkaftanlage 6.1, 6.2 im Vergleich zur anderen Windkraftanlage 6.1, 6.2 eine neue, verbesserte Komponente aufweisen. Die technische Spezifikation kann beispielsweise von der Steuereinrichtung 4 analysiert werden und entsprechende (aktuelle) Leistungskennungen erstellt werden.

Bei einem Erfordernis zur Deaktivierung mindestens einer Windkraftanlage 6.1, 6.2 können die Leistungskennungen in einem Auswertemodul der Steuereinrichtung 4 ausgewertet werden. In einem einfachen Fall kann eine Leistungskennung ein Zahlenwert sein. In diesem Fall können die Zahlenwerte miteinander verglichen werden und beispielsweise der niedrigste Wert bestimmt werden. Die Steuereinrichtung 4 kann dazu eingerichtet sein, die zu dem niedrigsten Wert korrespondierende Windkraftanlage 6.1, 6.2 über das Kommunikationsnetz 8 zu deaktivieren.

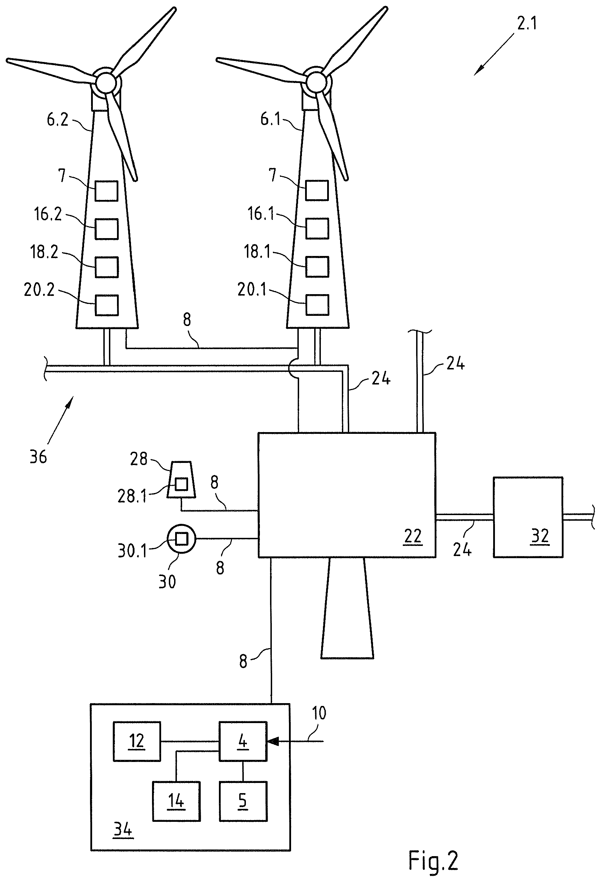

Figur 2 zeigt eine weitere schematische Ansicht eines weiteren Ausführungsbeispiels eines Windenergiesystems 2.1 gemäß der vorliegenden Erfindung. Im vorliegenden Ausführungsbeispiel handelt es sich bei dem Windenergiesystem 2.1 um ein Offshore-Windenergiesystem 2.1.

Das Offshore-Windenergiesystem 2.1 umfasst eine Substation 22. Die Offshore-Substation 22 bzw. Offshore-Schaltanlage 22 kann insbesondere ein Umspannwerk umfassen. Von der Schaltanlage 22 kann die erzeugte elektrische Energie über geeignete Seekabel 24 direkt oder über eine Hochspannungs-Gleichstromübertragungsplattform an ein Onshore-Umspannwerk 32 übertragen und von dort ins Netz eingespeist werden. Darüber hinaus kann die Substation 22 weitere Subeinrichtungen, wie mindestens einen Generator, insbesondere Dieselgenerator, umfassen. Ein Dieselgenerator ermöglicht es, den Betrieb auch bei einem Verlust der Rückkoppelenergie einer Hochspannungs-Gleichstromübertragungsplattform aufrechtzuerhalten.

Über ein oder mehrere Energiekabel 24 sind mehrere Windkraftanlagen 6.1, 6.2 mit der Substation 22 elektrisch verbunden. Die Energiekabel 24 sind vorliegend als Seekabel 24 gebildet. Ein Energiekabel 24 ist insbesondere dazu eingerichtet, die von einer Windkraftanlage 6.1, 6.2 erzeugte elektrische Energie zur nächsten Windkraftanlage 6.1, 6.2 bzw. an die Substation 22 zu übertragen.

Im vorliegenden Ausführungsbeispiel ist eine Mehrzahl von Windkraftanlagen 6.1, 6.2 in mehreren Strängen 36 bzw. Strings 36 in Reihe geschaltet. Beispielsweise können acht Stränge mit jeweils sechs Windkraftanlagen in einem Windenergiesystem vorgesehen sein.

Vorliegend ist zu Gunsten einer besseren Übersicht lediglich ein Strang 36 mit zwei Windkraftanlagen 6.1, 6.2 abgebildet. Lediglich angedeutet werden in der Figur 2 weitere Stränge.

Ein Ende eines Strangs 36 ist elektrisch über ein Energiekabel 24 mit der Substation 22 verbunden. Das andere Ende kann über ein zusätzliches Energiekabel mit dem Ende eines anderen Stranges, beispielsweise über eine Schaltereinrichtung, elektrisch verbindbar sein. Ferner kann vorgesehen, dass ein Strang optional mit mehreren anderen Strängen verbunden werden kann. Es versteht sich, dass gemäß anderen Varianten der Erfindung die Windkraftanlagen 6.1, 6.2 auch in Ringstrukturen angeordnet sein können.

Eine Windkraftanlage 6.1, 6.2 kann eine Mehrzahl von Subeinrichtungen 16.1, 16.2, 18.1, 18.2, 20.1, 20.2 umfassen. Beispielhaft und nicht abschließend sind vorliegend ein Schaltgetriebe 16.1, 16.2, eine Klimaeinrichtung 18.1, 18.2 und ein Turmfundament 20.1, 20.2 dargestellt.

Eine Windkraftanlage 6.1, 6.2 kann darüber hinaus eine Mehrzahl an Sensoren aufweisen. Ein Sensor kann beispielsweise dazu eingerichtet sein, mindestens einen Betriebsparameter einer Subeinrichtung 16.1, 16.2, 18.1, 18.2, 20.1, 20.2 zu erfassen. Der mindestens eine erfasste Betriebsparameter kann über das Kommunikationsnetz 8 an die Steuereinrichtung 4 übertragen werden. Beispielsweise kann ein Betriebsparameter aktiv von einem Sensor an die Steuereinrichtung 4 oder in Abhängigkeit eines Anforderungssignals von der Steuereinrichtung 4 übertragen werden.

Darüber hinaus können in dem Offshore-Windenergiesystem 2.1 Erfassungsmittel 28, 30 zum Erfassen von aktuellen Umgebungsparametern, insbesondere von meteorologischen Parametern, vorgesehen sein. Beispielsweise kann mindestens ein Windmessmast 28 mit einer Windsensoreinrichtung 28.1 zur Erfassung der Windrichtung und/oder der Windgeschwindigkeit vorgesehen sein. Es versteht sich, dass ein Windmessmast 28 neben mindestens einer Windsensoreinrichtung 28.1 eine Mehrzahl von weiteren Subeinrichtungen aufweisen kann.

Des Weiteren ist im vorliegenden Ausführungsbeispiel eine Messboje 30 vorgesehen. Beispielhaft und nicht abschließend ist eine Sensoreinrichtung 30.1 zur Erfassung des Seegangs dargestellt. Auch hier versteht es sich, dass die Messboje 30 eine Mehrzahl von Subeinrichtungen aufweisen kann. Ferner versteht es sich, dass eine Mehrzahl von Windmessmasten und/oder Messbojen vorgesehen sein können.

Das Windenergiesystem 2.1 umfasst vorliegend eine Zentrale 34. Die Zentrale 34 kann entfernt von der Substation 22 und insbesondere an Land angeordnet sein. Die Zentrale 34 umfasst die Steuereinrichtung 4 und vorzugweise mindestens eine Datenbank 5, mindestens eine Anzeigeneinrichtung 12 und mindestens ein Eingabegerät 14.

Die Steuereinrichtung 4 ist dazu eingerichtet, die Leistungskennungen der mindestens zwei Windkraftanlagen 6.1, 6.2 zu bestimmen. Insbesondere ist die Steuereinrichtung 4 dazu eingerichtet, die Subleistungskennungen der jeweiligen Subeinrichtungen 16.1, 16.2, 18.1, 18.2, 20.1, 20.2 zu bestimmen.

Es kann mindestens ein (aktueller) Betriebsparameter bei der Bestimmung einer Subleistungskennung berücksichtigt werden, wie nachfolgend ausgeführt wird. Zusätzlich zu aktuellen Betriebsparametern können historische Betriebsparameter Berücksichtigung finden. Insbesondere kann ein Sensor dazu eingerichtet sein, einen Betriebsparameter kontinuierlich oder in vorgebbaren Zeitabständen, beispielsweise periodisch, zu erfassen. Sämtliche Messwerte können an die Steuereinrichtung 4 übertragen werden. Die Messwerte können in der Datenbank 5 gespeichert werden. Die historischen Messwerte können von der Steuereinrichtung 4 zur Bestimmung einer Subleistungskennung ausgewertet werden.

Beispielsweise kann bei der Bestimmung einer Subleistungskennung von der Steuereinrichtung 4 die Anzahl von vorherigen Ausfällen, die durchschnittliche Zeitdauer zwischen zwei Ausfällen und die Ausfalldauer einer Subeinrichtung 16.1, 16.2, 18.1, 18.2, 20.1, 20.2 berücksichtigt werden. Ebenso ist es vorstellbar, dass eine in naher Zukunft erforderliche Wartung einer Subeinrichtung 16.1, 16.2, 18.1, 18.2, 20.1, 20.2 und/oder der Windkraftanlage 6.1, 6.2, welche sich aus den historischen Daten ergeben kann, bei der Bestimmung einer Leistungskennung berücksichtigt werden kann.

Aus den jeweiligen Subleistungskennungen kann für jede Windkraftanlage 6.1, 6.2 von der Steuereinrichtung 4.1 eine zugehörige (Gesamt-)Leistungskennung bestimmt werden. Beispielsweise kann durch eine Summierung der einzelnen Subleistungskennungen die (Gesamt-)Leistungskennung bestimmt werden.

Es ist erkannt worden, dass eine bloße Summierung der einzelnen Subleistungskennungen unter Umständen zu einer Leistungskennung führt, die nicht die tatsächliche Betriebsfähigkeit einer Windkraftanlage 6.1, 6.1 repräsentiert. Insbesondere ist erkannt worden, dass unterschiedliche Subeinrichtungen 16.1, 16.2, 18.1, 18.2, 20.1, 20.2 unterschiedlich starken Einfluss auf die Betriebsfähigkeit einer Windkraftanlage 6.1, 6.2 haben können. Beispielsweise kann ein aktueller oder prognostizierter Defekt der Klimaeinrichtung 18.1, 18.2 im Turm einer Windkraftanlage 6.1, 6.2 nur einen geringen Einfluss auf die Betriebsfähigkeit im Vergleich zu einem aktuellen oder prognostizierten Defekt eines Schaltgetriebes 16.1, 16.2 haben. Während eine defekte Klimaeinrichtung 18.1, 18.2 die Leistungsfähigkeit einer Windkraftanlage 6.1, 6.2 nur unwesentliche beeinträchtigen kann, kann schon ein potentieller Defekt eines Schaltgetriebes 16.1, 16.2 einer Windkraftanlage 6.1, 6.2 erhebliche Auswirkungen auf die Leistungsfähigkeit haben. Vorzugsweise können die einzelnen Subleistungskennungen mit jeweils einem Gewichtungsfaktor versehen sein. Durch einen Gewichtungsfaktor kann der zuvor beschriebene Einfluss abgebildet und berücksichtigt werden.

Ist die Abschaltung einer Windkraftanlage 6.1, 6.2 erforderlich, kann die Steuereinrichtung 4 in Abhängigkeit der (Gesamt-)Leistungskennungen mindestens eine Windkraftanlage 6.1, 6.2 deaktivieren. Beispielsweise können die (Gesamt-)Leistungskennungen in der Steuereinrichtung 4 verglichen und in einem einfachen Fall die zu der kleinsten (Gesamt-)Leistungskennung korrespondierende Windkraftanlage 6.1, 6.2 deaktiviert werden.

Die aktuellen Betriebsparameter können während des regulären Betriebs des Windenergiesystems zusätzlich genutzt werden, um einen Ausfall einer Windkraftanlage 6.1, 6.2 oder (nur) einer Subeinrichtung 16.1, 16.2, 18.1, 18.2, 20.1, 20.2 zeitnah zu detektieren. Beispielsweise kann ein optisches und/oder akustisches Alarmsignal durch die Steuereinrichtung 4 erzeugt werden. Anschließend können geeignete Maßnahmen zur Beseitigung der Störung eingeleitet werden.

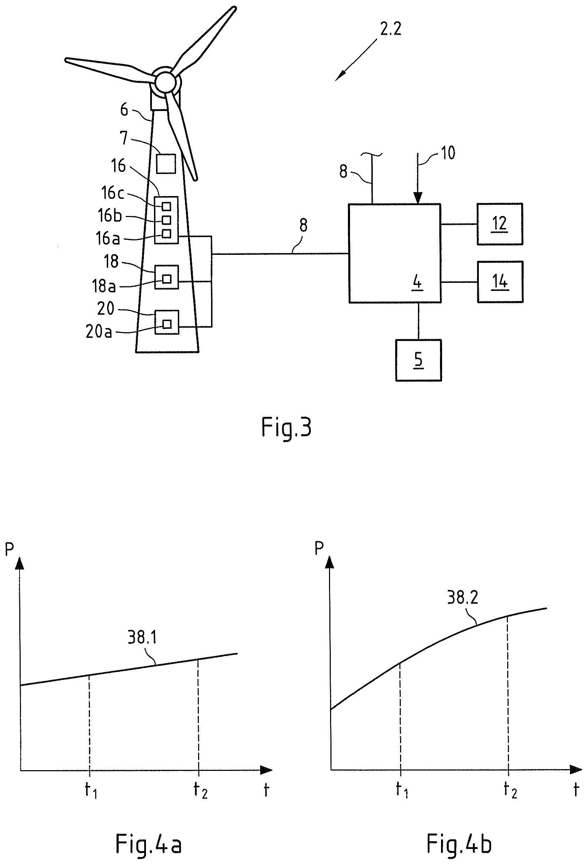

Nachfolgend wird eine beispielhafte Bestimmung einer (Gesamt-)Leistungskennung einer Windkraftanlage 6 mit Hilfe der Figur 3 näher erläutert. Figur 3 zeigt eine schematische Ansicht eines weiteren Ausführungsbeispiels eines Windenergiesystems 2.2 gemäß der vorliegenden Erfindung.

Bei der dargestellten Windkraftanlage 6 handelt es sich um eine Offshore-Windkraftanlage 6, welche über ein Kommunikationsnetz 8 mit der Steuereinrichtung 4 verbunden ist. Die Windkraftanlage 6 umfasst vorliegend drei Subeinrichtungen 16, 18, 20. Es versteht sich, dass die Windkraftanlage 6 eine Vielzahl weiterer Subeinrichtungen aufweisen kann. Vorliegend sind ein Schaltgetriebe 16, eine Klimaeinrichtung 18 und ein Turmfundament 20 dargestellt.

Ferner kann eine Subeinrichtung 16, 18, 20 mindestens einen Sensor 16a, 16b, 16c, 18a, 20a aufweisen. Insbesondere kann das Turmfundament 20 einen Sensor 20a zur Erfassung des Zustands des Turmfundaments 20 aufweisen. Beispielsweise können sich durch eine Bewegung des Meeresbodens und/oder durch den Seegang Risse im Turmfundament 20 bilden. Dies kann mittels eines Sensors 20a detektiert werden.

Die Klimaeinrichtung 18 kann einen Sensor 18a aufweisen. Insbesondere kann ein Temperatursensor 18a zur Erfassung der aktuellen Temperatur im Turm der Windkraftanlage 6 vorgesehen sein.

Das Schaltgetriebe 16 weist im vorliegenden Ausführungsbeispiel drei Sensoren 16a, 16b und 16c auf. Ein erster Sensor 16a kann beispielsweise ein Vibrationssensor 16a sein. Ein zweiter Sensor 16b kann ein Temperatursensor 16b sein. Ein dritter Sensor 16c kann die Reinheit des eingesetzten Schmieröls erfassen.

Es versteht sich, dass eine Subeinrichtung 16, 18, 20 mehr als die dargestellten Sensoren 16a, 16b, 16c, 18a, 20a aufweisen kann. Ferner versteht es sich, dass ein Sensor 16a, 16b, 16c, 18a, 20a eine Mehrzahl von Messköpfen aufweisen kann.

Wie bereits beschrieben wurde, können die Sensordaten über ein Kommunikationsnetz 8 an die Steuereinrichtung 4 übertragen werden. Neben den Sensordaten können zur Bestimmung einer Subleistungskennung auch historische Daten und/oder aktuelle Umgebungsparameter, wie meteorologische Umgebungsparameter, herangezogen werden. Mit zumindest einem Teil dieser Daten können dann Subleistungskennungen $E_i$ bestimmt werden. Die Leistungskennung $E_{GES}$ der Windkraftanlage 6 kann insbesondere mittels der folgenden Formel bestimmt werden:

$$E_{GES} = \frac{\sum_{i=1}^{n} E_i \cdot W_i}{\sum_{i=1}^{n} W_i} \qquad (1)$$

wobei $E_{GES}$ die (Gesamt-) Leistungskennung, $W_i$ ein Gewichtungsfaktor und n die Anzahl der Subeinrichtungen 16, 18, 20 ist.

Vorzugsweise kann alternativ oder zusätzlich zu einer aktuellen Leistungskennung auch eine prognostizierte Leistungskennung bestimmt werden. Insbesondere können bei einer prognostizierten Leistungs-Zeitcharakteristik zusätzlich zu den aktuellen Betriebsparametern und/oder historischen Daten prognostizierte Umgebungsparameter, insbesondere meteorologische Umgebungsparameter, berücksichtigt werden.

Zur Bestimmung einer prognostizierten Leistungskennung kann die Steuereinrichtung 4 eingerichtet sein, zumindest von der Windkraftanlage 6 ein virtuelles Modell zu erzeugen. In dem Modell können insbesondere weitere Parameter, die die Energieerzeugung beeinflussen, berücksichtigt werden. Hierzu zählen beispielsweise Umgebungsparameter, wie meteorologische Parameter, oder der Seegang. Insbesondere können sich Leistungskennungen von Windkraftanlagen über die Zeit ändern und insbesondere in Abhängigkeit von Umgebungsparametern unterschiedlich verlaufen. Mittels eines virtuellen Modells können verschiedene Szenarien simuliert und analysiert werden.

Die Figuren 4a und 4b zeigen beispielhafte prognostizierte Leistungskennungsverläufe 38.1, 38.2 bei gleichen Umgebungsparametern für zwei Windkraftanlagen 6.1, 6.2. Wie zu erkennen ist, ist die Leistungskennung 38.1 der ersten Windkraftanlage 6.1 bis zu einem Zeitpunkt $t_1$ größer bzw. besser als die Leistungskennung 38.2 der zweiten Windkraftanlage 6.2. Ab dem Zeitpunkt $t_1$ (bis zum Zeitpunkt $t_2$) verhält es sich hingegen umgekehrt.

Wenn eine Abschaltung von mindestens einer Windkraftanlage 6.1, 6.2 erforderlich ist, kann als zusätzliche Information die erforderliche Zeitdauer vorliegen. Beispielsweise kann ein Leistungssollwert für eine bestimmte Zeitdauer vorgegeben werden.

Ist beispielsweise eine Abschaltung von mindestens einer Windkraftanlage 6.1, 6.2 bis zu einem Zeitpunkt $t_1$ erforderlich, so kann im obigen Beispiel die weitere Windkraftanlage 6.2 deaktiviert werden. Grund hierfür ist die geringere Leistungskennung der weiteren Windkraftanlage 6.2 zwischen den Zeitpunkten 0 und $t_1$.

Ist hingegen die Deaktivierung bis zu einem Zeitpunkt $t_2$ erforderlich, so kann im obigen Beispiel die erste Windkraftanlage 6.1 deaktiviert werden. Grund hierfür ist die geringere Leistungskennung der ersten Windkraftanlage 6.1 zwischen den Zeitpunkten 0 und $t_2$.

Die Simulierung kann während des regulären Betriebs und/oder zum Zeitpunkt des Erfordernisses einer Deaktivierung einer Windkraftanlage von der Steuereinrichtung 4 durchgeführt werden. Die Simulationsergebnisse können in einer Datenbank 5 gespeichert und regelmäßig aktualisiert werden.

Zur Prüfung und Verbesserung der Vorhersage kann die Ist-Leistungskennung einer Windkraftanlage 6 mit der prognostizierten Leistungskennung einer Windkraftanlage 6 verglichen werden. Entsprechende Ergebnisse können analysiert und in der Datenbank 5 gespeichert werden.

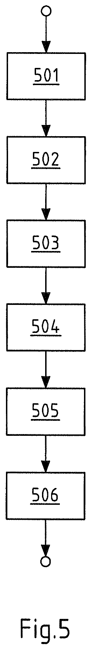

Schließlich zeigt Figur 5 ein Flussdiagramm eines Ausführungsbeispiels eines Verfahrens gemäß der vorliegenden Erfindung zum Steuern von mindestens einer Windkraftanlage.

In einem ersten Schritt 501 kann mindestens ein Betriebsparameter einer Windkraftanlage erfasst werden. Bevorzugt können eine Mehrzahl von Betriebsparametern von einer Mehrzahl von Windkraftanlagen erfasst werden. Die Erfassung eines Betriebsparameters kann zu bestimmten Zeitpunkten oder kontinuierlich erfolgen. Zusätzlich kann mindestens ein aktueller Umgebungsparameter erfasst und/oder historische Betriebsparameter bereitgestellt werden.

In einem nächsten Schritt 502 kann die Steuereinrichtung 4 insbesondere aus den zuvor genannten Parametern und Daten die Leistungskennung einer Windkraftanlage bestimmen. Beispielsweise kann die Leistungskennung aus einer Mehrzahl von Subleistungskennungen bestimmt werden, wie zuvor bereits beschrieben wurde. Bevorzugt werden sämtliche Leistungskennungen von sämtlichen Windkraftanlagen des Windenergiesystems bestimmt. Diese können in einer Datenbank abgespeichert werden. Vorzugsweise wird die Bestimmung in vorgebbaren Zeitabständen durchgeführt, um möglichst aktuelle Leistungskennungen vorliegen zu haben. In diesem Schritt 502 können auch Leistungskennungen beispielsweise durch Simulation in einem Modell prognostiziert werden. Auch diese können gespeichert werden.

Wenn in einem Schritt 503 beispielsweise ein Signal von einem Netzbetreiber empfangen wird, die ins Netz zu speisende Leistung zu reduzieren, kann in einem Schritt 504 eine Auswertung der aktuellen und/oder prognostizierten Leistungskennungen von der Steuereinrichtung 4 durchgeführt werden. Es versteht sich, dass alternativ die Auswertung bereits in Schritt 502 durchgeführt worden sein kann. Insbesondere kann mindestens die Windkraftanlage identifiziert werden, dessen aktuelle Leistungskennung und/oder prognostizierte Leistungskennung am geringsten ist.

Nach einer Identifikation dieser Windkaftanlage kann diese von der Steuereinrichtung deaktiviert werden (Schritt 505). Es versteht sich, dass es erforderlich sein kann, zwei oder mehr Windkraftanlagen zu deaktivieren. In diesem Fall werden dann die zwei oder mehr Windkraftanlagen mit den geringsten Leistungskennungen deaktiviert.

Nach einer vorgebbaren Zeitdauer oder nach dem Empfang einer entsprechenden Anweisung kann die Steuereinrichtung in einem Schritt 506 die mindestens eine deaktivierte Windkraftanlage wieder aktivieren.

**Patentansprüche**

**1.** Windenergiesystem (2, 2.1, 2.2), insbesondere Offshore-Windenergiesystem (2, 2.1, 2.2), umfassend:

- eine erste Windkraftanlage (6, 6.1) und mindestens eine weitere Windkraftanlage (6, 6.2),
- wobei die Windkraftanlagen (6, 6.1, 6.2) jeweils eine Leistungserfassungseinrichtung (7) zum Erfassen des Ist-Werts der abgegeben Leistung aufweisen, und
- mindestens eine über ein Kommunikationsnetz (8) mit den Windkraftanlagen (6, 6.1, 6.2) verbundene Steuereinrichtung (4),
- wobei die erste Windkraftanlage (6, 6.1) mindestens eine Betriebszustandserfassungseinrichtung (16a, 16b, 16c, 18a, 20a) zur Erfassung von mindestens einem Betriebsparameter der ersten Windkraftanlage (6,6.1) aufweist,
- wobei die weitere Windkraftanlage (6, 6.2) mindestens eine Betriebszustandserfassungseinrichtung (16a, 16b, 16c, 18a, 20a) zur Erfassung von mindestens einem Betriebsparameter der weiteren Windkraftanlage (6, 6.2) aufweist,
- wobei die Steuereinrichtung (4) eingerichtet ist, eine Leistungskennung für die erste Windkraftanlage (6, 6.1) zumindest in Abhängigkeit des Betriebsparameters der ersten Windkraftanlage (6, 6.1) zu bestimmen,
- wobei die Steuereinrichtung (4) eingerichtet ist, eine Leistungskennung für die weitere Windkraftanlage (6, 6.2) zumindest in Abhängigkeit des Betriebsparameters der weiteren Windkraftanlage (6, 6.1) zu bestimmen, und
- wobei die Steuereinrichtung (4) eingerichtet ist, bei einer erforderlichen Leistungsreduzierung mindestens eine Windkraftanlage (6, 6.1, 6.2) in Abhängigkeit der Leistungskennungen zu deaktivieren,

**dadurch gekennzeichnet, dass**

- die Steuereinrichtung (4) eingerichtet ist, ein Modell von mindestens einer Windkraftanlage (6, 6.1, 6.2) zu erzeugen,
- die Steuereinrichtung (4) eingerichtet ist, zumindest einen Leistungskennungsverlauf der Windkraftanlage (6, 6.1, 6.2) mittels des Modells zu simulieren, und
- die Steuereinrichtung (4) eingerichtet ist, bei einer erforderlichen Leistungsreduzierung mindestens eine Windkraftanlage (6, 6.1, 6.2) in Abhängigkeit des Simulationsergebnisses zu deaktivieren.

2. Windenergiesystem (2, 2.1, 2.2) nach Anspruch 1, **dadurch gekennzeichnet, dass**

- die Steuereinrichtung (4) eingerichtet ist, die Leistungskennungen der Windkraftanlagen [6, 6.1, 6.2) miteinander zu vergleichen, und

- die Steuereinrichtung (4) eingerichtet ist, bei einer erforderlichen Leistungsreduzierung mindestens eine Windkraftanlage (6, 6.1, 6.2) in Abhängigkeit des Vergleichsergebnisses zu deaktivieren.

3. Windenergiesystem (2, 2.1, 2.2) nach Anspruch 1 oder 2, **dadurch gekennzeichnet, dass**

- eine Betriebszustandserfassungseinrichtung (16a, 16b, 16c, 18a, 20a) eingerichtet ist, den Betriebsparameter kontinuierlich oder in vorgebbaren Zeitabständen zu erfassen,
- eine Datenbank (5) zur Speicherung der erfassten Betriebsparameterwerte vorgesehen ist, und
- die Steuereinrichtung (4) eingerichtet ist, die Leistungskennung der Windkraftanlage (6, 6.1, 6.2) in Abhängigkeit der gespeicherten Betriebsparameterwerte zu bestimmen.

4. Windenergiesystem (2, 2.1, 2.2) nach einem der vorherigen Ansprüche, **dadurch gekennzeichnet, dass**

- mindestens eine Erfassungseinrichtung (28, 30) zum Erfassen von mindestens einem Umgebungsparameter, insbesondere eines aktuellen meteorologischen Umgebungsparameters, vorgesehen ist, und
- die Steuereinrichtung (4) eingerichtet ist, die Leistungskennung einer Windkraftanlage (6, 6.1, 6.2) in Abhängigkeit des Umgebungsparameters zu bestimmen.

5. Windenergiesystem (2, 2.1, 2.2) nach einem der vorherigen Ansprüche, **dadurch gekennzeichnet, dass**

- eine Windkraftanlage (6, 6.1, 6.2) mindestens eine Subeinrichtung (16, 16.1, 16.2, 18, 18.1, 18.2, 20, 20.1, 20.2) aufweist, und
- die Steuereinrichtung (4) eingerichtet ist, mindestens eine Subleistungskennung der Subeinrichtung (16, 16.1, 16.2, 18, 18.1, 18.2, 20, 20.1, 20.2) der Windkraftanlage (6, 6.1, 6.2) zu bestimmen.

6. Windenergiesystem (2, 2.1, 2.2) nach Anspruch 5, **dadurch gekennzeichnet, dass** die Steuereinrichtung (4) ein-

**EP 2 667 023 B1**

gerichtet ist, aus einer Mehrzahl von Subleistungskennungen einer Windkraftanlage (6, 6.1,6.2) die Leistungskennung der Windkraftanlage (6, 6.1, 6.2) zu bestimmen.

7. Windenergiesystem (2, 2.1, 2.2) nach Anspruch 5 oder 6, **dadurch gekennzeichnet, dass** die Steuereinrichtung (4) eingerichtet ist, mindestens einer Subleistungskennung mindestens einen Gewichtungsfaktor zu zuordnen.

8. Verfahren zum Steuern eines Windenergiesystems (2, 2.1, 2.2), insbesondere eines Offshore-Windenergiesystems, (2, 2.1, 2.2) umfassend eine erste Windkraftanlage (6, 6.1) und mindestens eine weitere Windkraftanlage (6, 6.2), umfassend:

   - Erfassen der Ist-Werte der abgegeben Leistung der Windkraftanlagen (6, 6.1, 6.2),
   - mindestens ein Betriebsparameter einer ersten Windkraftanlage (6, 6.1) erfasst wird,
   - mindestens ein weiterer Betriebsparameter von mindestens einer weiteren Windkraftanlage (6, 6.2) erfasst wird,
   - eine Leistungskennung für die erste Windkraftanlage (6, 6.1) zumindest in Abhängigkeit des Betriebsparameters der ersten Windkraftanlage (6, 6.1) bestimmt wird,
   - mindestens eine weitere Leistungskennung für die weitere Windkraftanlage (6, 6.2) in Abhängigkeit des Betriebsparameters der weiteren Windkraftanlage (6, 6.2) bestimmt wird, und
   - bei einer erforderlichen Leistungsreduzierung mindestens eine Windkraftanlage (6, 6.1, 6.2) in Abhängigkeit der Leistungskennungen deaktiviert wird,

   **dadurch gekennzeichnet, dass**

   - ein Modell von mindestens einer Windkraftanlage (6, 6.1, 6.2) erzeugt wird,
   - zumindest ein Leistungskennungsverlauf der Windkraftanlage (6, 6.1, 6.2) mittels des Modells simuliert wird, und
   - bei einer erforderlichen Leistungsreduzierung mindestens eine Windkraftanlage (6, 6.1, 6.2) in Abhängigkeit des Simulationsergebnisses deaktiviert wird.

9. Computerprogramm mit Instruktionen ausführbar auf einem Prozessor derart, dass ein Windenergiesystem (2, 2.1, 2.2) gemäß dem Verfahren nach Anspruch 8 gesteuert wird.

**Claims**

1. A wind energy system (2, 2.1, 2.2), in particular an offshore wind energy system (2, 2.1, 2.2), comprising:

   - a first wind turbine apparatus (6, 6.1) and at least one further wind turbine apparatus (6, 6.2),
   - wherein the wind turbine apparatuses (6, 6.1, 6.2) each have a power detection unit (7) for detecting the actual value of the output power, and
   - at least one control unit (4) connected to the wind turbine apparatuses (6, 6.1, 6.2) via a communications network (8),
   - wherein the first wind turbine apparatus (6, 6.1) comprises at least one operating state detection unit (16a, 16b, 16c, 18a, 20a) for detecting at least one operating parameter of the first wind turbine apparatus (6, 6.1),
   - wherein the further wind turbine apparatus (6, 6.2) comprises at least one operating state detection unit (16a, 16b, 16c, 18a, 20a) for detecting at least one operating parameter of the further wind turbine apparatus (6, 6.2),
   - wherein the control unit (4) is configured to determine a performance characteristic for the first wind turbine apparatus (6, 6.1) at least in dependence on the operating parameter of the first wind turbine apparatus (6, 6.1),
   - wherein the control unit (4) is configured to determine a performance characteristic for the further wind turbine apparatus (6, 6.2) at least in dependence on the operating parameter of the further wind turbine apparatus (6, 6.1), and
   - wherein the control unit (4) is configured to deactivate at least one wind turbine apparatus (6, 6.1, 6.2) in dependence on the performance characteristics when a power reduction is required,

   **characterized in that**

   - the control unit (4) is configured to generate a model of at least one wind turbine apparatus (6, 6.1, 6.2),
   - the control unit (4) is configured to simulate at least one power characteristic curve of the wind turbine apparatus (6, 6.1, 6.2) by means of the model, and
- the control unit (4) is configured to deactivate at least one wind turbine apparatus (6, 6.1, 6.2) in dependence on the simulation result if a power reduction is required.

2. Wind energy system (2, 2.1, 2.2) according to claim 1, **characterized in that**

   - the control unit (4) is configured to compare the performance characteristics of the wind turbine apparatuses (6, 6.1, 6.2) with each other, and
   - the control unit (4) is configured to deactivate at least one wind turbine apparatus (6, 6.1, 6.2) in dependence on the comparison result if a power reduction is required.

3. Wind energy system (2, 2.1, 2.2) according to claim 1 or 2, **characterized in that**

   - an operating state detection unit (16a, 16b, 16c, 18a, 20a) is configured to detect the operating parameter continuously or at predeterminable time intervals,
   - a database (5) is provided for storing the acquired operating parameter values, and
   - the control unit (4) is configured to determine the power characteristic of the wind turbine apparatus (6, 6.1, 6.2) in dependence on the stored operating parameter values.

4. Wind energy system (2, 2.1, 2.2) according to one of the preceding claims, **characterized in that**

   - at least one detecting unit (28, 30) for detecting at least one environmental parameter, in particular a current meteorological environmental parameter, is provided, and
   - the control unit (4) is configured to determine the power characteristic of a wind turbine apparatus (6, 6.1, 6.2) in dependence on the environmental parameter.

5. Wind energy system (2, 2.1, 2.2) according to one of the preceding claims, **characterized in that**

   - a wind turbine apparatus (6, 6.1, 6.2) comprises at least one subunit (16, 16.1, 16.2, 18, 18.1, 18.2, 20, 20.1, 20.2), and
   - the control unit (4) is configured to determine at least one sub performance characteristic of the subunit (16, 16.1, 16.2, 18, 18.1, 18.2, 20, 20.1, 20.2) of the wind turbine apparatus (6, 6.1, 6.2).

6. Wind energy system (2, 2.1, 2.2) according to claim 5, **characterized in that** the control unit (4) is configured to determine the performance characteristic of the wind turbine apparatus (6, 6.1, 6.2) from a plurality of sub performance characteristics of a wind turbine apparatus (6, 6.1, 6.2).

7. Wind energy system (2, 2.1, 2.2) according to claim 5 or 6, **characterized in that** the control unit (4) is configured to assign at least one sub power characteristic with at least one weighting factor.

8. A method for controlling a wind energy system (2, 2.1, 2.2), in particular an offshore wind energy system (2, 2.1, 2.2), comprising a first wind turbine apparatus (6, 6.1) and at least one further wind turbine apparatus (6, 6.2), the method comprising:

   - detecting the actual values of the output of the wind power apparatuses (6, 6.1, 6.2),
   - wherein at least one operating parameter of a first wind turbine apparatus (6, 6.1) is detected,
   - wherein at least one further operating parameter of at least one further wind turbine apparatus (6, 6.2) is detected,
   - wherein a performance characteristic for the first wind turbine apparatus (6, 6.1) is determined at least in dependence on the operating parameter of the first wind turbine apparatus (6, 6.1),
   - wherein at least one further performance characteristic for the further wind turbine apparatus (6, 6.2) in dependence on the operating parameter of the further wind turbine apparatus (6, 6.2) is determined, and
   - wherein at least one wind turbine apparatus (6, 6.1, 6.2) is deactivated in dependence on the performance characteristics if a power reduction is required,

   **characterized in that**

- a model of at least one wind turbine apparatus (6, 6.1, 6.2) is generated,
- at least one power characteristic curve of the wind turbine apparatus (6, 6.1, 6.2) is simulated by means of the model, and
- at least one wind turbine apparatus (6, 6.1, 6.2) is deactivated in dependence on the simulation result if a power reduction is required.

9. A computer program with instructions executable on a processor such that a wind energy system (2, 2.1, 2.2) is controlled according to the method of claim 8.

**Revendications**

1. Système d'énergie éolienne (2, 2.1, 2.2), en particulier système d'énergie éolienne (2, 2.1, 2.2) offshore, comprenant:

- une première installation d'énergie éolienne (6, 6.1) et au moins une autre installation d'énergie éolienne (6, 6.2),
- sachant que les installations d'énergie éolienne (6, 6.1, 6.2) sont dotées chacune d'un système de saisie de puissance (7) pour la saisie de la valeur réelle de la puissance délivrée, et
- au moins un dispositif de commande (4) qui est relié avec les installations d'énergie éolienne (6, 6.1, 6.2) par le biais d'un réseau de communication (8),
- sachant que la première installation d'énergie éolienne (6, 6.1) est dotée d'au moins un système de saisie de l'état de fonctionnement (16a, 16b, 16c, 18a, 20a), qui est destiné à saisir au moins un paramètre de fonctionnement de la première installation d'énergie éolienne (6, 6.1),
- sachant que l'autre installation d'énergie éolienne (6, 6.2) est dotée d'au moins un système de saisie de l'état de fonctionnement (16a, 16b, 16c, 18a, 20a), qi est destiné à saisir au moins un paramètre de fonctionnement de l'autre installation d'énergie éolienne (6, 6.2),
- sachant que le dispositif de commande (4) est aménagé pour déterminer une indication de puissance relative à la première installation d'énergie éolienne (6, 6.1) au moins en fonction du paramètre de fonctionnement de la première installation d'énergie éolienne (6, 6.1),
- sachant que le dispositif de commande (4) est aménagé pour déterminer une indication de puissance relative à l'autre installation d'énergie éolienne (6, 6.2) au moins en fonction du paramètre de fonctionnement de l'autre installation d'énergie éolienne (6, 6.1),
et
- sachant que le dispositif de commande (4) est aménagé pour désactiver au moins une installation d'énergie éolienne (6, 6.1, 6.2) en fonction des indications de puissance, quand une réduction de puissance est nécessaire,

**caractérisé en ce que**

- le dispositif de commande (4) est aménagé pour générer un modèle d'au moins une installation d'énergie éolienne (6, 6.1, 6.2),
- le dispositif de commande (4) est aménagé pour simuler au moins une évolution d'une indication de puissance d'au moins une installation d'énergie éolienne (6, 6.1, 6.2) au moyen du modèle, et
- le dispositif de commande (4) est aménagé pour désactiver au moins une installation d'énergie éolienne (6, 6.1, 6.2) en fonction du résultat de la simulation, quand une réduction de puissance est nécessaire.

2. Système d'énergie éolienne (2, 2.1, 2.2) selon la revendication 1,
**caractérisé en ce que**

- le dispositif de commande (4) est aménagé pour comparer les indications de puissance des installations d'énergie éolienne (6, 6.1, 6.2) entre elles,
- le dispositif de commande (4) est aménagé pour désactiver au moins une installation d'énergie éolienne (6, 6.1, 6.2) en fonction du résultat de la comparaison, quand une réduction de puissance est nécessaire.

3. Système d'énergie éolienne (2, 2.1, 2.2) selon la revendication 1 ou 2,
**caractérisé en ce que**
un système de saisie de l'état de fonctionnement (16a, 16b, 16c, 18a, 20a) est aménagé pour saisir le paramètre de fonctionnement continuellement ou à intervalles de temps pouvant être prédéterminés,

- une banque de données (5) est prévue pour la mémorisation de paramètres de fonctionnement, et

- le dispositif de commande (4) est aménagé pour déterminer l'indication de puissance de l'installation d'énergie éolienne (6, 6.1, 6.2) en fonction des valeurs des paramètres de fonctionnement mémorisées.

4. Système d'énergie éolienne (2, 2.1, 2.2) selon l'une des revendications précédentes, **caractérisé en ce que**

- l'on prévoit au moins un système de saisie (28, 30), qui est destiné à saisir au moins un paramètre d'environnement, en particulier un paramètre d'environnement météorologique actuel, et que
- le dispositif de commande (4) est aménagé pour déterminer l'indication de puissance d'une installation d'énergie éolienne (6, 6.1, 6.2) en fonction du paramètre d'environnement.

5. Système d'énergie éolienne (2, 2.1, 2.2) selon l'une des revendications précédentes, **caractérisé en ce que**

- une installation d'énergie éolienne (6, 6.1, 6.2) est dotée d'au moins un dispositif subordonné (16, 16.1, 16.2, 18, 18.1, 18.2, 20, 20.1, 20.2), et que
- le dispositif de commande (4) est aménagé pour déterminer au moins une sous-indication de puissance du dispositif subordonné (16, 16.1, 16.2, 18, 18.1, 18.2, 20, 20.1, 20.2) de l'installation d'énergie éolienne (6, 6.1, 6.2).

6. Système d'énergie éolienne (2, 2.1, 2.2) selon la revendication 5 **caractérisé en ce que** le dispositif de commande (4) est aménagé pour déterminer, à partir d'une pluralité de sous-indications d'une installations d'énergie éolienne (6, 6.1, 6.2), l'indication de puissance de l'installations d'énergie éolienne (6, 6.1, 6.2).

7. Système d'énergie éolienne (2, 2.1, 2.2) selon la revendication 5 ou 6, **caractérisé en ce que** le dispositif de commande (4) est aménagé pour associer au moins un facteur de pondération à au moins une sous-indication de puissance.

8. Procédé de commande d'un Système d'énergie éolienne (2, 2.1, 2.2), en particulier système d'énergie éolienne (2, 2.1, 2.2) offshore, comprenant au moins une première installation d'énergie éolienne (6, 6.1) et au moins une autre installation d'énergie éolienne (6, 6.2), comprenant

- la saisie des valeurs réelles de la puissance des installations d'énergie éolienne (6, 6.1, 6.2),
- la saisie d'au moins un paramètre de fonctionnement d'une première installation d'énergie éolienne (6, 6.1)
- la saisie d'au moins un autre paramètre de fonctionnement d'au moins une autre installation d'énergie éolienne (6, 6.2),
- la détermination d'une indication de puissance relative à la première installation d'énergie éolienne (6, 6.1) au moins en fonction du paramètre de fonctionnement de la première installation d'énergie éolienne (6, 6.1),
- la détermination d'au moins une autre indication de puissance relative à l'autre installation d'énergie éolienne (6, 6.2) en fonction du paramètre de fonctionnement de l'autre installation d'énergie éolienne (6, 6.2),
- la désactivation d'au moins une installation d'énergie éolienne (6, 6.1, 6.2) en fonction des indications de puissance, quand une réduction de la puissance est nécessaire,

**caractérisé en ce que**

- un modèle d'au moins une installation d'énergie éolienne (6, 6.1, 6.2) est généré,
- au moins une évolution d'une indication de puissance de l'installation d'énergie éolienne (6, 6.1, 6.2) est simulée au moyen du modèle, et
- au moins une installation d'énergie éolienne (6, 6.1, 6.2) est désactivée en fonction du résultat de la simulation, quand une réduction de puissance est nécessaire.

9. Programme d'ordinateur avec instructions pouvant être exécuté sur un processeur de manière à ce qu'un système d'énergie éolienne (2, 2.1, 2.2) puisse être commandé conformément au procédé selon la revendication 8.

Fig.1

Fig.2

Fig.3

Fig.4a

Fig.4b

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006032389 A1
- US 2008048501 A1
- EP 1571746 A1